# EUROPEAN PATENT APPLICATION

(11) **EP 2 868 939 A1**
(43) Date of publication of application: **06.05.2015**
(21) Application number: 14191656.9
(22) Date of filing: 04.11.2014
(51) Int. Cl.: F16C 35/077, F16H 7/20, F16C 13/00, F16H 55/36, F16C 33/58, F16C 19/18

(54) **Pulley-bearing assembly**

(30) Priority: 04.11.2013 IT TO20130893
(71) Applicant: Aktiebolaget SKF, 41 550 Göteborg (SE)
(72) Inventor: Ciulla, Luca, I-10137 Torino (IT); Patalacci, Ferdinando, 10090 Rosta (TO) (IT)
(74) Representative: Tedeschini, Luca

(57) **Abstract**

*Pulley-bearing assembly (10) provided with a pulley (8) and a rolling bearing (11) confined by respective coupling surfaces (112)(122) co-axial each other and defining a groove (140) in between; the rolling bearing (11) being provided with two rows (13, 14) of rolling bodies (15) having pitch diameters (D, Di) of different size, and a metallic ring (30) being pressed into the groove (140) and deformed so as to join the pulley (8) with the bearing (11).*

## Description

### Technical field

The present invention is related to a pulley-bearing assembly.

The present invention is particularly suitable, but not exclusively, in the technical field of transmission pulleys for distribution belts or chains of internal combustion engines, as well as driving belts for auxiliary engine components (injection pump, water pump, alternator, and so on). By means of the present invention a pre-mounted assembly can be realized, the assembly comprising a pulley, a flanged rolling bearing and suitable coupling means, interposed between said pulley and bearing.

### Background art

In the state of the art, pulley-bearing assemblies for pre-assembling a pulley together with its bearing are already known. For example, document US 4,602,875 describes an assembly composed of a rolling bearing, a pulley and a pair of screens, which are pre-mounted, before being installed on a support cylindrical shaft. A rolling bearing, provided with a rotatable outer ring, a stationary inner ring and a row of rolling bodies between the two rings, is molded inside a pulley hub and is confined between the pair of screens, which are steadily fixed to the pulley. The screens are coupled to the pulley by means of tongues, which are realized in one piece with the pulley and easily detachable from said pulley. When the assembly is mounted, the screens are exactly located and steadily fixed to the stationary inner ring. Therefore, when the pulley start rotating with respect to the inner ring, the tongues detach themselves from the pulley, thus allowing further rotations of the pulley itself.

This and other known solutions, for example solutions that, instead of the outer ring molding on the pulley hub, present further coupling means, as screws, have some drawbacks. Main technical problem is the molding process (if existing), which is not suitable for engine applications. On the other hand, solutions presenting threaded couplings require the use and the management of a high component number. Moreover, the use of rolling bearing, provided with a single row of spheres, let the assembly be few resistant to support loads, which are transmitted by the distribution belt or the chain and/or by the auxiliary component belt.

### Invention summary

Aim of the present invention is to realize a pulley-bearing assembly, said assembly overcoming the above described inconveniences.

According to the present invention, a pulley-bearing assembly is described, the assembly having the characteristics as in the enclosed independent claim.

Further embodiments of the invention, preferred and/or particularly advantageous, are described according to the characteristics as in the enclosed dependent claims.

### Brief description of the drawing

A preferred embodiment of the invention will be now described, in an exemplifying and not limitative way, by reference to the enclosed drawings, in which:
- Figure 1 schematically shows a turn belt structure of an internal combustion engine, incorporating a preferred embodiment of one or more pulley-bearing assemblies according to the present invention;
- Figure 2 shows in a section in an enlarged scale, a first preferred embodiment of a pulley-bearing assembly according to the present invention;
- Figure 3 shows, schematically and with parts taken away for clarity, a detail of the assembly of Fig. 1;
- Figure 4 shows in a section in an enlarged scale, a detail of Fig. 3, with the metallic ring taken away for more clarity;
- Figure 5 shows in a section in an enlarged scale, a further detail of Fig. 3.

### Detailed description

The invention is related to a pulley-bearing assembly and is particularly suitable, but not exclusively, in the technical field of distribution belts or chains of internal combustion engines, as well as driving belts for auxiliary engine components.

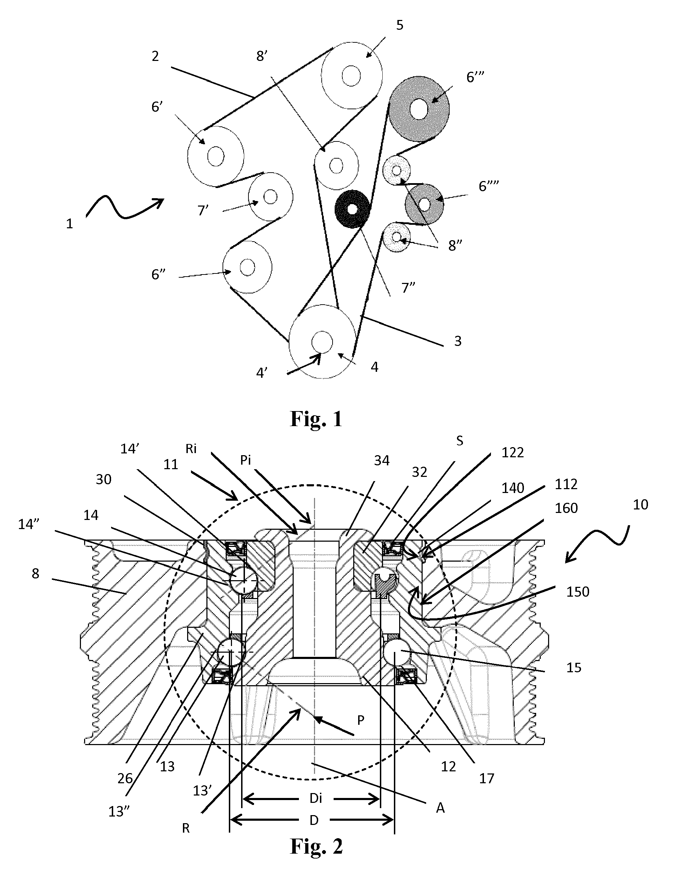

In Figure 1 is shown a typical turn belt structure 1 of an internal combustion engine, wherein the turn belt 1 comprises a belt 2 for driving the distribution components and a belt 3 for driving the auxiliary components. In particular, the belt 2 is driven by a pulley 4 of a crankshaft 4' and transmits the motion to a pulley 5 of a cam shaft (known and therefore not shown) and to two pulleys 6', 6" respectively of an injection pump (known and therefore not shown) and a water pump (known and therefore not shown). For tensioning the belt 2, a idler pulley 7' is foreseen, while to complete the turn belt layout also a transmission pulley 8' is present, where said transmission pulley will be better described hereafter. The driving belt 3 for auxiliary components is always driven by the pulley 4 of the crankshaft 4' and drives two pulleys respectively of a power steering and an alternator (known and therefore not shown). For tensioning the belt 3, also in this case a idler pulley 7" is foreseen, as well as a pair of transmission pulleys 8", which will be better described hereafter.

In Fig. 2, with 10 is shown as a whole a pulley-bearing assembly, in which the pulley 8, according to a not limitative embodiment, can be a transmission pulley of a turn belt, as shown in Fig. 1. Throughout the present description and in the claims, the terms and expressions indicating positions and orientations such as "radial" and "axial" are to be taken to refer to the axis of rotation A of the assembly 10. Instead, expressions as "axially external" and "axially internal" are to be referred to the assembled condition, in this case, respectively, to an engine side and to an opposite engine side.

The assembly 10 comprises, integrated each other, a pulley 8 and a rolling bearing 11, which presents a rotation axis A and comprising:
- an inner ring 12, stationary, co-axial to the rotation axis A;
- an outer ring 26, rotatable, located outside the inner ring 12, and defining together with the inner ring 12 an annular gap 17, which is sealed by a standard sealing element S;
- two rows 13 and 14 of rolling bodies 15, preferably spheres, which are interposed between the inner ring 12 and the outer ring 26, to allow the rotation of the outer ring 26 with respect to the inner ring 12, said rolling bodies being suitable to roll inside respective radially inner raceways 13', 14' and radially outer raceways 13", 14" respectively realized outside the inner ring 12 and inside the outer ring 26.

In particular, the two rows 13 and 14 of rolling bodies 15 are distinguished, with respect to the rotation axis A, in an axially inner row 14 and in an axially outer row 13. While the axially outer raceway 13' is in one piece with the inner ring 12, the axially inner raceway 14' is realized on the annular insert 32. Said annular insert 32 is engaged to the inner ring 12 by means of a rolled edge 34, which is located at an inner ring 12 end and extends radially outwards and axially close to the annular insert 32.

In the above described rolling bearing 11, a diameter D of the centers of the spheres 15 of the more axially external row 13 is greater than the diameter Di of the centers of the spheres 15 of the more axially internal row 14. This is the configuration of an asymmetric rolling bearing, which presents functional advantages with respect to symmetric bearings, bearings having the diameter D equal to the diameter Di. In fact, let us remember the pressure center definition, in other words a point P, Pi located on the rotational axis A and determined by the intersection of the pressure line (line along with act loads on the rolling bodies) R, Ri with the axis A. In the case of an asymmetric bearing, being the diameter D greater than the diameter Di, it is possible to change the relative distance between the pressure centers P and Pi. In particular, in the case shown in Fig. 2, by increasing diameter D the point P moves away in an axially outer direction with respect to the point Pi and the distance between the pressure centers P and Pi increases. Therefore, the asymmetric bearing can be designed to balance loads between the two rows 13, 14 of spheres, by moving the pressure centers, in other words by varying the lever arms with respect to the application point of the external load. Therefore, asymmetry allows to reach, with same dimensions and external shape between asymmetric rolling bearing 11 and symmetric rolling bearing, a greater stiffness and stability.

According to Fig. 2, the assembly 10 comprises an intermediate joint 30, which joins the pulley 8 to the outer ring 26, and is defined by a metallic ring 30, inserted into a groove 140, which is realized partly by a coupling surface 122, which belongs to an external surface 150 of the outer ring 26 of the rolling bearing 11 and partly by a coupling surface 112, belonging to an internal surface 160 of the pulley 8.

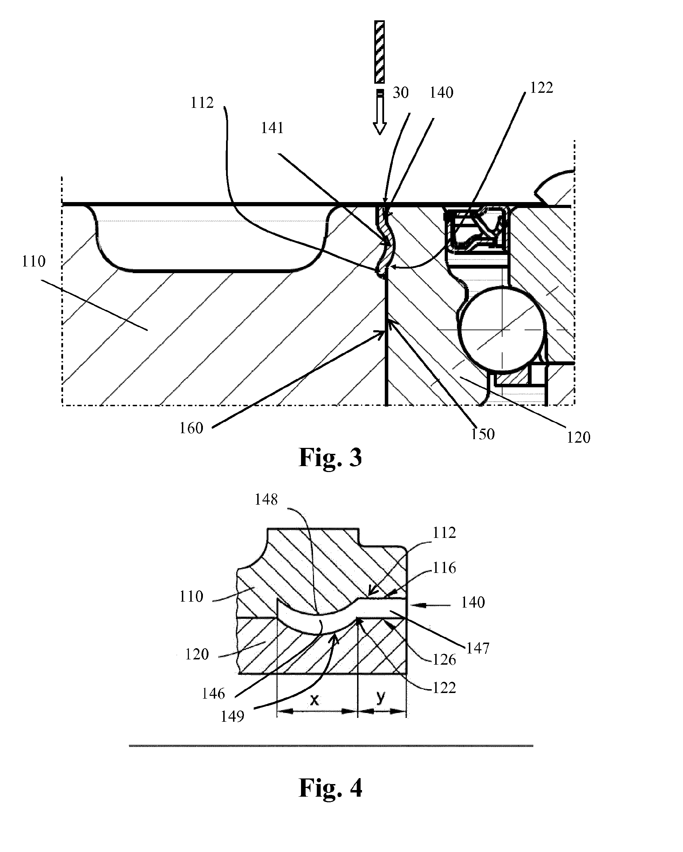

For a better understanding of the pulley-bearing assembly, a preferred embodiment will be now described, as schematized in Fig. 3, showing a portion 110 of the pulley 8, a portion 120 of the outer ring 26 of the bearing and a metallic ring 30.

The portion 110 of the pulley is joined to the portion 120 of the outer ring by means of the metallic ring 30 which is press fit into a groove 140, realized between a first coupling surface 112 of the portion 110 of the pulley and a second coupling surface 122 of the portion 120 of the bearing outer ring. The first and the second coupling surface 112, 122 are the contact surfaces with the metallic ring 30. At least part of the groove 140 comprises an arcuate section 141, defined by a radial clearance between the coupling surface 112, 122. Among said surfaces, one of them 122 presents a concavity, the other 112 a convexity.

By press fitting the metallic ring 30, both portions 110 and 120 are locked in axial direction, both ways. Moreover, the assembly also gets a remarkable resistance to shearing stress in axial direction. The metallic ring 30 is press fit into the groove 140 from an incoming side of the groove, as shown by the arrow in Fig. 3. The metallic ring material is subjected to plastic strain, gets the shape of the arcuate section of the groove 140 and forms a joint between the portion 110 of the pulley and the portion 120 of the bearing outer ring. Preferably, to completely fill the volume of the a arcuate section, the metallic ring 30 has a volume which is at least equal to the volume of the arcuate section. Moreover, the metallic ring 30 could have a thickness t, which is equal to the maximum radial clearance between the first and second coupling surface of the arcuate section. Moreover, the metallic ring 30 has a suitable ductility, to assume the needed plastic strain, and a suitable mechanical resistance, as a function of the engine application. Therefore, the choice of the metallic ring 30 material depends on the geometry of the groove 140. Preferably, but not exclusively, the metallic ring 30 can be obtained by a tube or a sheet shaped material.

Figure 4 shows, in a greater detail, the shape of the groove 140, inside of which the metallic ring 30 is inserted.

The groove 140 is obtained between a portion 110 of the pulley 8 and a portion 120 of the bearing outer ring 26. The groove 140 comprises an arcuate section 146, defined by a clearance between a concave portion 149 of the coupling surface 122 and an opposite convex portion 148 of the coupling surface 112. The groove 140 presents a second section 147, defined by a clearance between a cylindrical portion 116 of the first coupling surface 112 of the pulley and a cylindrical portion 126 of the second coupling surface 122 of the bearing outer ring. Therefore, the groove 140 comprises an arcuate section 146 and a cylindrical section 147. According to a practical embodiment, the arcuate section has an axial lenght x of about 5 mm and the cylindrical section has an axial lenght y ranging between 2 and 3 mm.

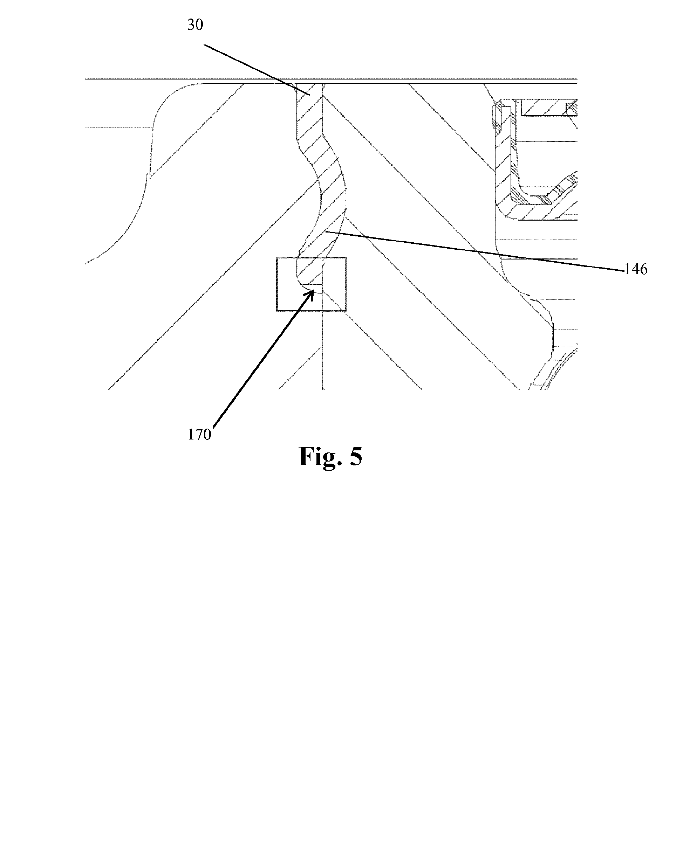

The groove 140 could also have a simplified shape, in other words the groove can be provided with only an arcuate section, without the cylindrical section. Moreover, the groove 140 could also be obtained by means of a concave portion of the pulley coupling surface and a convex portion of the coupling surface of the outer ring, in other words, concavity and convexity are independent on the kind of component (outer ring or pulley). Finally, and with reference to Fig. 5, showing a detail of Fig. 3, the groove 140 can advantageously present, below the arcuate section 146, a further small groove 170, which can be filled by part of the ring 30 material, after assembling.

Other than the embodiments of the invention, as above disclosed, it is to be understood that a vast number of variations exist. It should also be appreciated that the exemplary embodiment or exemplary embodiments are only examples and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents.

## Claims

1. A pulley-bearing assembly (10) comprising:
- a pulley (8, 8', 8"),
- a rolling bearing (11) provided with an inner ring (12), an outer ring (26) and two rows (13, 14) of rolling elements (15),
- an intermediate joint (30) which joins the pulley (8, 8', 8") to the bearing (11), the pulley (8, 8', 8") and the bearing (11) having, respectively, a first coupling surface (112) and a second coupling surface (122) arranged coaxially and in spaced juxtaposition, thereby defining a groove (140), 340) between the first and second coupling surfaces,
the assembly (10), moreover, having in combination:
- the two rows (13, 14) of rolling elements (15) have pitch diameters (D, Di) of different size,
- the first coupling surface (112) is localized along an internal surface (160) of the pulley (8),
- the second coupling surface (122) is localized along an external surface (150) of the outer ring (26) e one coupling surface (122) of said first (112) and second (122) coupling surface comprises a concave portion (149) and the other coupling surface (112) of said first (112) and second (122) coupling surface comprises a convex portion (148), radially opposed to the concave portion (149), in a way that the groove (140) comprises an arcuate section (146),
- the intermediate joint (30) is a metallic ring (30), which is pressed into the groove (140) and deformed so as to adopt the shape of the arcuate section (146),
the assembly (10) being **characterized in that**:
- the metallic ring (30) has a volume, which is at least equal to a volume of the arcuate section (146) of the groove (140) and
- the groove (140), below the arcuate section (146) ends with a further small groove (170).

2. Assembly according to claim 1, **characterized in that** the inner race (13') of a first ball row (13) is formed integrated in the inner ring (12) of the rolling bearing (11), while the inner race (14') of a second ball row (14) is formed on an annular insert (32), being part of the inner ring (12) and integrated in the inner ring (12) by means of a rolled edge (34), the rolled edge (34) being localized at an inner ring (12) end and protruding radially towards outside and axially towards the annular insert (32).

3. Assembly according to one of the preceding claims, **characterized in that** the metallic ring (30), in an undeformed state, has a thickness (t) equal to a maximum radial gap between the convex portion (148) and the concave portion (149).

4. Assembly according to one of the preceding claims, **characterized in that** the groove (140) also comprises a cylindrical section (147).

5. Assembly according to one of the preceding claims, **characterized in that** the metallic ring (30) is formed from tube material.

6. Assembly according to one of the preceding claims, **characterized in that** the metallic ring (30) is formed from sheet material.
